# EUROPEAN PATENT APPLICATION

(11) **EP 1 905 332 A1**
(43) Date of publication of application: **02.04.2008**
(21) Application number: 07075761.2
(22) Date of filing: 05.09.2007
(51) Int. Cl.: A47J 43/046, A47J 27/08

(54) **A multi-use machine for foodstuffs, in particular for domestic use**

(30) Priority: 27.09.2006 IT MO20060298
(71) Applicant: PROPRIETA' INDUSTRIALI SRL, 41100 Modena (IT)
(72) Inventor: Mordini, Massimo, 41100 Modena (IT)
(74) Representative: Gotra, Stefano

(57) **Abstract**

A multi-use machine (1) for foodstuffs is intended in particular for domestic use. The machine comprises: a lower support base (2) to which a recipient (4) is associated for foodstuffs, the recipient being superiorly provided with covers (14, 16) and exhibiting, on a bottom of the recipient, a rotating mincing organ (6), provided with blades (10), which organ (6) is powered by an electric motor (7) housed internally of the base. Also provided are means for adding or subtracting heat to or from the foods contained in the recipient, means for sealing (17, 18), interposed between the recipient and the covers for guaranteeing a hermetic closure of the recipient including for pressures above atmospheric pressure, as well as a first calibrated valve (19) which allows exit of the fluid from the recipient when the pressure in the recipient reaches a predetermined level.

## Description

The invention relates to a multi-use machine for foodstuffs, in particular for domestic use.

With particular reference to the domestic environment, the prior art includes machines for mixing, blending and/or mincing foodstuffs, which generally comprise a lower support base for an open-top container internally of which a recipient for the foods is housable, provided with an upper opening.

Commonly these machines are provided with a cover for closing the upper opening of the recipient, and with a rotating mincing organ, provided with a series of blades of various structure, shape and size, which is arranged on the bottom of the recipient and which is operatively associable to an electric motor housed internally of the base.

The known machines can further comprise means of known type for adding or removing heat to or from the food contained in the recipient; these are, in particular, means for heating or cooling which are arranged externally of the recipient, in this case are normally metallic, and in contact with the external wall of the recipient. In this way food placed internally of the recipient can be heated even during the functioning of the rotating organ.

A machine of the above-described type, to which reference will be made during the following description, is illustrated in European patent application EP 1,647,217.

The known machines, however, are all susceptible to improvement, aimed at obtaining a greater versatility and facility of use.

The aim of the present invention is therefore to make improvements to the structure and the operating parts of the machine in order to improve them and facilitate their use.

In the ambit of the technical aim, a further aim of the present invention is to achieve the set aims with a simple structure which is relatively easy to put into practice, safe to use and efficient, as well as relatively inexpensive.

An advantage of the invention is that it can also be applied, with slight modifications, to machines having known structures.

These aims and advantages and more besides are all attained by the present invention, as it is characterised in the appended claims.

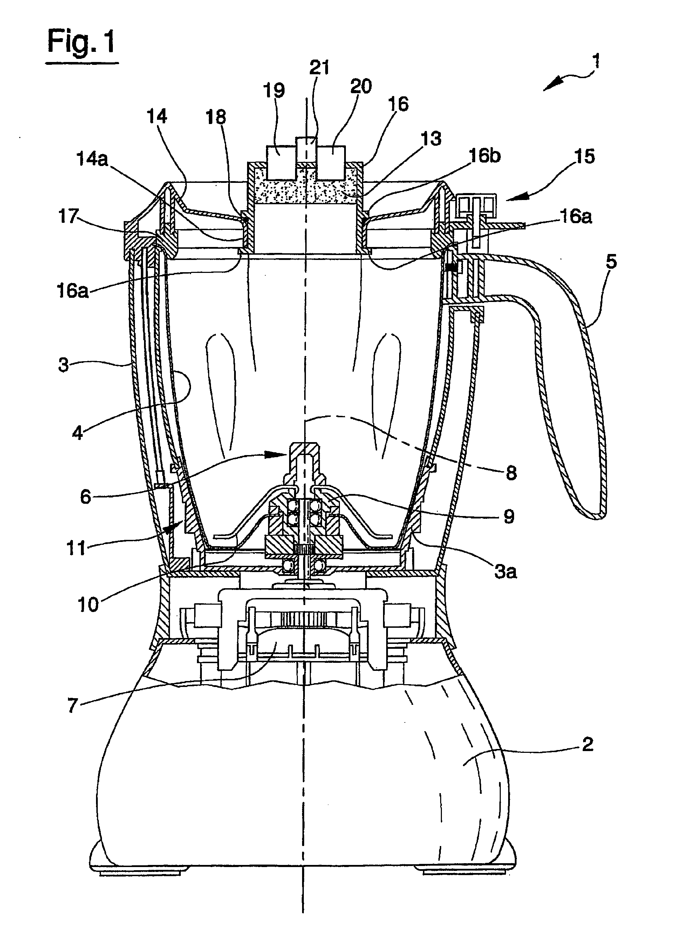

Further characteristics and advantages of the present invention will better emerge from the detailed description that follows, of preferred but not exclusive embodiment of the invention, illustrated purely by way of nonlimiting example in accompanying figure 1, which is a side view with some parts seen in section of the machine of the invention.

With reference to the figure of the drawing, 1 denotes in its entirety a multi-use machine for foodstuffs, in particular for domestic use.

The machine 1 comprises a lower support base 2, to which an external container 3 is associated, the container 3 being substantially cylindrical and hollow and superiorly open.

Note that the term "superiorly", as indeed other references to the reciprocal positioning of the various elements making up the machine, is to be understood as being relative to the arrangement of the elements making up the machine 1 in optimal operating conditions, with the support base 2 on a horizontal plane.

The machine 1 comprises a recipient 4 for foods, which is substantially hollow, cylindrical and superiorly open; the recipient 4 is removably housable internally of the external container 3.

The recipient 4 is advantageously completely containable internally of the external container 3, and is provided with gripping means 5, such as a handle or the like, which are fixed at the external lateral surface of the recipient 4, in proximity of the upper edge thereof.

The machine 1 comprises a rotating mincing organ 6 for the foods contained internally of the recipient 4; the rotating organ is located on the bottom of the recipient 4 and is operatively associable to a motor 7 housed internally of the base 2.

As in the known machines, the mincing organ 6 comprises a central shaft 8 which is arranged substantially vertically and is axially rotatably supported by a support element 9 fixed at the bottom of the recipient 4.

The central shaft 8 has an upper first end projecting internally of the recipient 4, from which a series of blades 10 extends radially, the blades being interchangeable and variously and specially formed according to the function they carry out; the shaft 8 further exhibits a second lower end, which projects from the bottom of the recipient 4 on the side facing the base 2 and which is couplable to the motor 7, generally an electric motor. The coupling between the rotating organ and the motor can obviously be of a different type from what is described above; for example, as happens in some types of machines, transmission and/or gears can be interposed between the rotating element and the motor.

The machine 1 comprises means 11 of known type for adding or subtracting heat to or from the foods contained in the recipient 4.

In particular, the machine 1 illustrated comprises means for heating 11 the recipient 4 which are associated to the external container 3 and are destined to heat the products contained in the recipient 4. As with the known machines, the means for heating 11 comprise a heating element, such as for example an electrical resistance or the like, located in contact with a portion of internal surface 3a of the external container 3 which extends along the whole perimeter of the internal lateral wall in the external container, close to the bottom. As with known machines, the heating element, not illustrated in the figures, is advantageously sunk into the internal lateral wall of the external container 3, at the surface portion 3a thereof.

A layer of soft heat-conducting material, such as rubber or the like, is usually included, interposed between the internal portion of surface 3a and a portion of the external surface of the recipient 4. The layer of soft material usefully extends over the whole portion of internal surface 3a and adapts to deformations of the recipient 4, which recipient 4 is made for example of a metal material such as steel, which deformations are due to temperature changes; in this way constant contact is maintained between the heating element and the external surface of the recipient. Also with regard to the means for adding or subtracting heat, types or arrangements thereof can be different from those described herein.

The machine 1 comprises means for closing 14, 16 for the closure of the upper opening of the recipient 4. Means for sealing 17, 18 are further included, which are interposed between the recipient and the means for closing and are destined to guarantee sealed closure of the recipient 4 even at pressures above atmospheric pressure.

In the configuration illustrated in the figure, the means for closing comprise a disc-shaped first cover 14, removably associated to the container 3 and fixable to the external container 3 by a blocking element 15; the cover 14 can be associated to the container 3 either by a snug fit or by a hinge located diametrically opposite the blocking element 15, or using any other known-type connecting system.

When the first cover 14 is fixed to the container 3 it superposes, with interposing of a first annular seal 17, onto the upper opening of the recipient 4 in order to guarantee sealed closure, thanks to the presence of the seal 17.

A substantially cylindrical second cover 16 is also included, removably associated to a mouth 14a afforded on the first cover, coaxially to the cover itself. In the illustrated embodiment, the second cover is associated to the mouth 14a with a bayonet-type connection which includes axial channels, not shown in the figure, into which radial projections 16a fashioned on the lower end of the cover 16 insert; by being subsequently rotated, the projections 16a insert below the lower end of the mouth 14a, thus assuring the connection between the cover 16 and the cover 14.

A circumferential ring 16b is provided on the cover 16, below which a second seal 18 is arranged, which when the second cover 16 is connected to the first cover 14 is pressed against the upper edge of the mouth 14a, thus guaranteeing the sealed closure of the second cover 16.

The machine further comprises a first calibrated valve 19, which is interposed between the recipient and the external environment and allows passage of fluid (which is air or steam) from the recipient towards the external environment when the pressure in the recipient reaches a predetermined level.

In the illustrated embodiment the first valve 19, illustrated schematically and realisable as a usual valve for pressure cookers or any other valve of known type, is arranged on the upper wall of the second cover 16 and allows fluid to exit from the recipient to the external environment when the pressure in the recipient reaches a predetermined level.

A second safety valve 20 is further included, also schematically illustrated and which can be a known-type safety valve, which is interposed between the recipient and the external environment and which is destined to allow the outflow of the fluid from the recipient when the pressure in the recipient reaches a predetermined safety level, which in the case of the heating machine is obviously above the pressure at which the first calibrated valve opens. The second safety valve is advantageously located on the upper wall of the second cover 16.

The second safety valve can also be realised in another way. Given that the surface of the second cover facing into the recipient is known, once the maximum pressure level beyond which the safety valve must open is established, the force generated on the second cover on reaching that pressure can be calculated; it is thus possible to structure the radial projections 16a, or the upper wall of the second cover, in such a way that the radial projections 16a break when the said pressure is reached.

A third valve 21 can also be included, which is interposed between the recipient and the external environment, and which is associable to means for aspirating, not illustrated, and which allows aspiration of fluid from the inside of the recipient. The third valve, like the means for aspirating, is of known type, for example such as the means for aspirating usually applied in containers in which a certain depression is to be obtained. The third valve 21 can also usefully be afforded in the second cover 16.

The arrangement of one or more of the above-mentioned valves can be different from what is illustrated and described herein; the valves can be, for example, arranged on the first cover 14.

It is also useful to include at least a filter 13, arranged internally of the recipient 4 and upstream of the valves, which is conformed and arranged such as to be crossed by the fluid which will then exit from the valves. The filter, which as illustrated in the figure can be inserted in the upper internal part of the second cover to cover the ends of the valves which face internally of the recipient, is advantageously of a type, such as one including charcoal, which eliminates or at least strongly reduces the odours of the fluid exiting the recipient through the valves.

As mentioned, the machine is provided with a mincing organ and means for heating; thus it is possible, thanks to the presence of the first valve 19 and the means for sealing, to perform high-pressure cooking of the foods contained inside the recipient 4, while at the same time mincing or chopping the same food. The presence of the second valve 20 prevents any over-pressure building up inside the recipient 4, which high pressures might damage the machine or, even worse, create possible situations of risk to people.

The third valve 21, combined with means for aspirating, exhibits various advantages. For example, once the products inside the machine have been processed (for example minced and cooked), fluid can be aspirated from inside the recipient without having to open it, such as to obtain a certain degree of depression internally of the recipient which can thus usefully be directly used as a container for keeping food "under vacuum", increasing conservation time therefor. It is further possible to aspirate fluid from inside the recipient during the stage of heating and mixing the products contained therein; in this case the lower pressure obtained internally of the recipient enable the products to be boiled at lower temperatures with respect to normal boiling temperature (100°C), thus facilitating a more rapid concentration of products which, as it is done at low temperatures, produces an improvement in quality in the final product, at least as far as some products are concerned (such as fruit, vegetables and the like), which suffer in terms of their qualities as cooking temperatures rise.

Note that the arrangement of valves and filters in the closing elements of the recipient means that by simple modification of the known closing elements an easy application of the invention to existing machines can be made.

Differently to what is described above, in a machine having the described characteristics the means 11 for adding or subtracting heat to or from the foods contained in the recipient may also not be heating means but rather cooling means, refrigerating elements of which are inserted in place of the heating elements provided for the means for heating; the cooling of the refrigerating elements can be obtained using normal refrigeration plants such as those used for ice-cream makers. It should however be noted that the effect of sealing and the presence of the valves, in particular the first and second valve, has a smaller practical importance with this type of machine, i.e. in the case of a machine provided with means for refrigerating. With the use of the means for refrigerating, together with the use of the mincing organ 6, contemporary mixing and cooling of foodstuffs can be performed, for example for making ice cream.

It is further possible, though with an increase in costs and complexity of the machine, to have a contemporary presence of both the means for heating and the means for cooling, which obviously will function alternatively.

It has been observed in practice that the invention attains its aims, and it is particularly stressed that the presence of the first valve, together with the presence of the means for closing provided with the means for sealing and the means for heating, enables pressure-cooking of the foods internally of the recipient. The second valve further allows the pressure-cooking operation to be carried out in conditions of safety, avoiding the risks (in particular risks to people) which might derive from an uncontrolled increase in the pressure inside the recipient.

A further advantage is derived from the presence of the filter, which prevents escape of sometimes unpleasant odours from the recipient, in particular during high-pressure cooking of foodstuffs.

The presence of the means for cooling, in particular if combined with the means for heating, also constitutes a further aspect for increasing the versatility of the machine, enabling it to be used in particular for production of ice cream.

## Claims

1. A multi-use machine (1) for foodstuffs, in particular for domestic use, of a type comprising: a lower support base (2) to which a recipient (4) is associated for foodstuffs superiorly provided with an opening for introduction of foodstuffs; means for closing (14, 16) the upper opening of the recipient; a rotating mincing organ (6) provided with blades (10), which is arranged on a bottom of the recipient and which is operatively associable to an electric motor (7) housed internally of the base; means (11) of known type for adding or subtracting heat to or from foodstuffs contained in the recipient; **characterised in that** it comprises: means for sealing (17, 18) interposed between the recipient and the means for closing, which guarantee a hermetic sealing of the recipient including for pressures exceeding atmospheric pressure; a first calibrated valve (19) interposed between the recipient and an external environment, for allowing fluid passage from the recipient to the external environment when the pressure inside the recipient reaches a predetermined level.

2. The machine of claim 1, **characterised in that** it comprises at least a second safety valve (20) interposed between the recipient and the external environment, for allowing fluid passage from the recipient when the pressure in the recipient itself reaches a predetermined safety value.

3. The machine of claim 1, **characterised in that** it comprises at least a third valve (21), interposed between the recipient and the external environment and associable to means for aspirating of known type, for allowing aspiration of fluid from inside the recipient.

4. The machine of claim 1, **characterised in that** the means for closing comprise: a first cover (14) removably associated to the recipient with interpositioning of a first seal (17); a second cover (16), removably associated to a mouth (14a) provided on the first cover with interpositioning of a second seal (18).

5. The machine of one or more of the preceding claims, **characterised in that** at least one of the first valve (19), the second valve (20) and the third valve (21) is located in the second cover (16).

6. The machine of one or more of the preceding claims, **characterised in that** it comprises at least a filter (13), arranged internally of the recipient upstream of the valves, which filter (13) is conformed and arranged such as to be crossed by the fluid exiting the valves.

7. The machine of one or more of the preceding claims, **characterised in that** the means (11) for adding or subtracting heat to or from the foodstuffs contained in the recipient contemporaneously comprise means for heating and means for refrigerating, both of known type; a functioning of one precluding a functioning of the other.
